# EUROPEAN PATENT APPLICATION

(11) **EP 0 749 691 A1**
(43) Date of publication of application: **27.12.1996**
(21) Application number: 96304547.1
(22) Date of filing: 19.06.1996
(51) Int. Cl.: A22B 5/00, A22C 17/10

(54) **Fastener**

(30) Priority: 20.06.1995 GB 9512535
(71) Applicant: Douglas Plastics Limited, Lanarkshire, ML11 ORA (GB)
(72) Inventor: McLaren, Michael David, Skipling, Biggar ML12 6HB (GB)
(74) Representative: Pattullo, Norman

(57) **Abstract**

A fastener (10) for attaching a label to an animal carcass having a flesh-piercing portion (12) and a label-securing clip (18), at least the flesh-piercing portion (12) being substantially non-metallic. The fastener (10) may be of a plastics material which is visibly distinct from raw meat.

## Description

This invention relates to a fastener, and relates more particularly but not exclusively to a fastener for fastening a label to the carcass of a meat animal.

In abattoirs and meat stores, it is desirable or mandatory that animal carcasses be labelled in a manner allowing easy visual identification. Means by which the label is secured to the carcass should not contaminate the meat, and as far as possible, either should not lodge permanently in the meat or should be easily identifiable if it (or any part of it) does rest in the meat when the label securing means supposedly is removed. Moreover, the label securing means should be safe to use, reliable, and economical.

European regulations currently prohibit the use of metal for label securing means in the context of meat carcasses for human consumption. Therefore certain potential solutions to the above-mentioned technical problems are excluded on legal grounds.

Non-metallic label fasteners from other types of use may present unacceptable problems when applied to meat. For example, clothing label fasteners cannot easily be detached, and frequently require to be cut off, which leaves a fragment of plastics embedded in the carcass. This is a health hazard, worsened by the lack of visual contrast between plastics and meat.

According to the present invention there is provided a fastener for attaching a label to an animal carcass, said fastener comprising a flesh-piercing portion and a label-securing clip, at least the flesh-piercing portion being substantially non-metallic.

The flesh-piercing portion is preferably barbed to enhance self-retention in flesh, and more preferably barbed in a manner that allows the hook to be detached from flesh without leaving any part of the hook remaining in the flesh. The flesh-piercing portion is preferably a hook.

The clip is preferably barbed to enhance retention of a label.

The fastener is preferably substantially of plastics material; the fastener may be a unitary moulding of plastics material. Typically the plastics material is food-grade plastics material.

The fastener may be of a material which is visibly distinct the carcass and flesh thereon; the material is preferably conspicuously distinct from normal colours of raw meat fit for human consumption, for example the material may be brilliant and/or fluorescent green.

Embodiments of the invention will now be described by way of example, with reference to the accompanying drawings wherein:-
Fig 1 is a plan view of a first embodiment of fastener in accordance with the present invention; and
Fig 2 is a plan view of a second embodiment of fastener in accordance with the present invention.

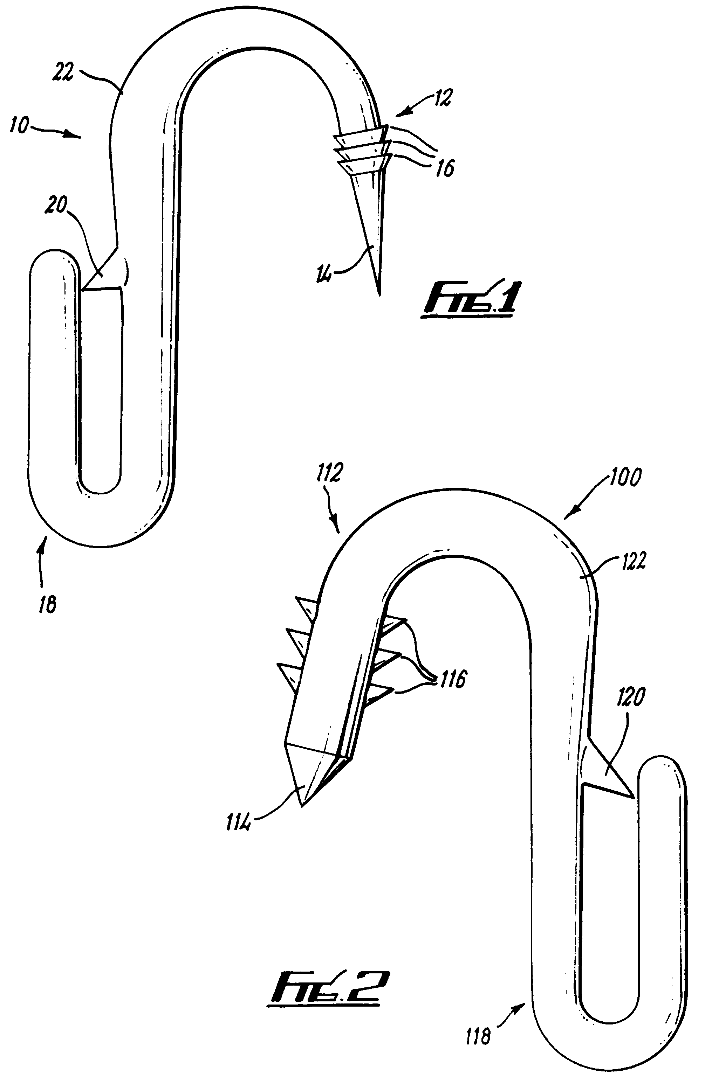

Referring first to Fig 1, the first embodiment of fastener 10 is a unitary moulding of food-grade plastics material, coloured a brilliant green.

One end of the fastener 10 is formed as a flesh-penetrating hook 12 with a sharp point 14. Immediately behind the point 14 are three circumferential ridges 16 which angle back from the point 14 to serve as barb-like retention-enhancing means to help retain the hook 12 in the flesh of a carcass (not shown).

The other end of the fastener 10 is formed as a bight 18 having parallel and closely spaced sides. The bight 18 forms a clip by reason of the natural resilience of the plastics material of which its fastener 10 is formed. The mouth of the bight of clip 18 is provided with a barb 20 angled to help retain items, such as a label (not shown), pushed into the clip 18.

The hook 12 has a shoulder 22 joining the hook to the clip 18. The shoulder 22 has a cross-sectional area which is generally greater than the cross-sectional area of the remainder of the fastener 10, such that the fastener 10 has adequate strength against fracture and excessive deformation when the hook 12 is forced into a carcass. The extra thickness of the shoulder 22 blends into the adjacent parts of the fastener 10 without significant discontinuity.

The relative disposition of the hook 12 and of the clip 18 are such that they lie in a common plane, and curve away from each other such that overall, the fastener 10 is somewhat S-shaped.

To use the fastener 10, the point 14 of the hook 12 is forced into a meat carcass (not shown), and hook penetration is continued until the ridges or barbs 16 are deeply buried, and the shoulder 22 is about to or has actually commenced penetration. Next, a label (not shown) is pushed into the clip 18 where it is retained by the barb 20. Thereby the meat carcass is labelled by means of a visibly conspicuous non-metallic fastener.

Turning now to Fig 2, this illustrates the second embodiment of fastener 100 in accordance with the present invention. Since the second embodiment 100 is generally similar to the first embodiment 10 (Fig 1), those parts of the second embodiment 100 which are equivalent or analogous to respective parts of the first embodiment 10 are given the same reference numerals, proceeded by a "1" (ie the second embodiment references are the first embodiment references plus 100). The following description of the second embodiment 100 will concentrate on those parts of the second embodiment which differ in significant detail from analogous parts of the first embodiment.
Accordingly, for a description of any part of the second embodiment not detailed below, reference should be made to the foregoing description of the like parts of the first embodiment 10.

Compared to the first embodiment of fastener 10, the second embodiment 100 principally differs in having a hook 112 which has greater cross-sectional dimensions and a blunter point 114. Also, in place of the circumferential ridges 16, the hook 112 has three pairs of distinct barbs 116 which are much larger than the ridges 16 and which project on either side of the body of the hook 112 (whereas the ridges 16 encircled the body of the hook 12).

The fastener 100 is used in the same manner as the fastener 10 (use of which was detailed above).

While certain modifications and variations of the invention have been described above in respect of exemplary embodiments, the invention is not restricted thereto, and other modifications and variations can be adopted without departing from the scope of the invention.

## Claims

1. A fastener for attaching a label to an animal carcass, said fastener comprising a flesh-piercing portion and a label-securing clip, at least the flesh-piercing portion being substantially non-metallic.

2. A fastener as claimed in Claim 1 wherein the flesh-piercing portion is barbed to enhance self-retention in flesh.

3. A fastener as claimed in Claim 1 or 2 wherein the flesh-piercing portion is a hook.

4. A fastener as claimed in any preceding Claim wherein the clip is barbed to enhance retention of a label.

5. A fastener as claimed in any preceding Claim wherein the fastener is substantially of food-grade plastics material.

6. A fastener as claimed in any preceding Claim wherein the fastener is of a material which is visibly distinct from the carcass and flesh thereon.
